(19)

Europäisches
Patentamt
European
Patent Office
Office européen
des brevets

(11)     **EP 2 790 029 A1**

(12)     **EUROPEAN PATENT APPLICATION**

(43) Date of publication:
15.10.2014  Bulletin 2014/42

(51) Int Cl.:
*G01R 31/40* *(2014.01)*

(21) Application number: 13382131.4

(22) Date of filing: 12.04.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Universidad Politécnica de Madrid**
**28040 Madrid (ES)**

(72) Inventors:
• **Herrero Martin, Rebeca**
**E-28040 Madrid (ES)**

• **Anton Hernandez, Ignacio**
**E-28031 Madrid (ES)**
• **Sala Pano, Gabriel**
**E-28040 Madrid (ES)**
• **Victoria Perez, Marta**
**E-28040 Madrid (ES)**
• **Askins, Stephens**
**E-28040 Madrid (ES)**

(74) Representative: **ABG Patentes, S.L.**
**Avenida de Burgos, 16D**
**Edificio Euromor**
**28036 Madrid (ES)**

(54)     **Method and device suitable fo characterizing photovoltaic concentration modules**

(57)     The present invention is a device suitable for characterizing photovoltaic concentration modules which allows obtaining the angular transmission function both of the module and of each group formed by cell and optical element, as well as for assessing the optical quality of the module.

FIG. 1A

EP 2 790 029 A1

**(Cont. next page)**

FIG. 1B

**Description**

Object of the Invention

The present invention is a device suitable for characterizing photovoltaic concentration modules which allows obtaining the angular transmission function both of the module and of each group formed by cell and optical element, as well as for assessing the optical quality of the module.

Background of the Invention

Conventional photovoltaic panels consist of a planar plate covered entirely with solar cells interconnected to one another and prepared for directly receiving global solar radiation. It is said to be direct because it is not necessary to place an optical element between the sun, the light source, and the solar cell. Such solar cells are capable of producing energy both from the incident light coming directly from the sun and from the diffused light resulting from intermediate reflections, for example.

Analyzing the electric power produced by the array of cells with respect to a uniform light beam in a factory or laboratory is sufficient to characterize the behavior of a conventional photovoltaic panel without it being necessary to reproduce the angular distribution of the sun in indoor measurement. The output power measured in the photovoltaic panel under that light source is, virtually, the only significant property.

There is another type of photovoltaic panels, the so-called photovoltaic concentration modules. Photovoltaic concentration modules use optical devices to increase the intensity of light striking the cells and only use the direct light coming from the solar disc, the angular extension of which on land surface is $\pm$ 0.27 degrees, and from a very small region in the sky around the disc, called circumsolar.

A photovoltaic concentration module is formed by a plurality of elementary units where each of them has an optical concentration element focusing the direct incident radiation on the opening area of the optical element in the solar cell. This cell is much smaller in size than the area of the solar cells used in conventional photovoltaic panels and they also work at greater intensities even a thousand times higher in an operative mode.

From the quality viewpoint, these systems must have at least three functional elements under control: the optical element, the cells and the interaction between both.

In a photovoltaic concentration module, the misalignments between the optical element and the cell means that the radiation concentrated by the optical system does not strike the solar cell or is significantly reduced. Since the photovoltaic concentration module is formed by a plurality of solar cell-optical element groups, the structure of the module can have mounting errors or deformations resulting in the inability of all the groups to deliver the maximum power in the same orientation of the module even though the individual optical element is well mounted with respect to the corresponding solar cell thereof. The quality of mounting each solar cell-optical element group as well as the good orientation of each of them within the module will intervene in the quality of the photovoltaic concentration module. Likewise, the optical element and the solar cell can have manufacturing defects that worsen the individual yield of a solar cell-optical element group.

The conventional measurement of the optical operation of a photovoltaic concentration module consists of illuminating the module and obtaining the power generated as the light changes its direction with respect to the normal (an abbreviation for normal direction) of the module, but maintaining the direction vector of the light in the same plane as the normal throughout the entire measurement, a plane which is called the meridian. The actual operation of the module under a specific light source when the module is misaligned with respect to the light source is thus estimated. The function obtained is called angular transmission function $f(\alpha)$ of the photovoltaic concentration module. The angular transmission function is defined for a specific light path contained in a meridian plane of the photovoltaic concentration module, $\alpha$ being the angle of incidence with respect to the normal determining the position in said path.

The angular transmission function $f(\alpha)$ of an "elementary unit" such as the power delivered by said elementary unit is defined as a function of the angle of incidence $\alpha$ of the light with which it is illuminated. The term elementary unit is used because the angular transmission function can be evaluated either on a module formed by a plurality of solar cell-optical element groups or on an elementary unit formed by a single solar cell-optical element group.

In practice, as carried out in the state of the art, to obtain this function $f(\alpha)$ the module is uniformly illuminated with a light source which is as similar as possible to the sun (both in angular amplitude and spectrum).

There are two options today that allow obtaining this measurement:

**Outdoor measurement:**

The module is fixed to a solar tracker responsible for maintaining the orientation of the normal with respect to the module towards the sun. The solar tracker also allows determining the pre-established degrees of misalignment with respect to the sun. Measurements are carried out under different illumination conditions with different angles of misalignment and particularly with zero misalignment.

The main drawback of this measurement is the dependence of the measurements on the weather conditions as well as the fact that the measurement conditions (spectrum, temperature, irradiation, wind speed...) can hardly be repeated.

Another significant drawback of this option is the need of taking measurements outdoors. It is necessary to add the additional time involved in transferring and mounting the module or modules to the time used in taking the measurement.

**Indoor measurement:**

In the characterization of a photovoltaic concentration module, as a result of the interposed optical concentration element, the light source that must be used for carrying out the measurements cannot have a large angular size such as in the photovoltaic panels, rather it must be formed by devices that produce a collimated beam; i.e., a uniform parallel ray beam. To take this measurement, a light source which imitates all the characteristics of the sun, including its angular extension, is necessary. Artificial illumination systems with parallel beams and a large surface area are difficult to manufacture, and those known in the state of the art can only operate in a "flash" mode to achieve the necessary illumination levels with an illumination duration of a few milliseconds, complicating the characterization.

What is called a "solar simulator for concentration modules" must be used to illuminate a concentration module. The main difference with respect to a simulator for conventional modules lies in the collimation of the essential light source for measuring photovoltaic concentration modules. To take the measurement of the angular transmission function, the power of the module must be measured while it rotates with respect to the collimated light beam as a result of the movement of the structure in which it is located.

The main drawback of this measurement is the need of including a rotary structure and the time consumed in measuring the power of the module for different positions. Actually, as many measurements as points or samples required for defining the transmission function must be taken. In practice, a resolution of the angular transmission function of at least 8 points in a specific direction is considered suitable. This means that 8 measurements of the power of the illuminated module are needed (with associated resource consumption), each in a specific position. Eight module movements are needed in total for each angular direction to be evaluated.

The characterization obtained depends directly on the light source used. To that end, if the light with which the system is characterized is different from sunlight (in angular size and spectrum), the measured behavior of the module will be very different in actual operating conditions, hence the importance of using a solar simulator suitable for such photovoltaic modules.

It is deduced from the foregoing that the quality control of the concentrators is problematic due to the source and to the fact that three aspects must be verified: optical element, cells and their interaction.

If the characterization of a photovoltaic concentration module is expensive and hardly feasible for being introduced in an expensive module manufacturing process, this is even more so for the characterization of each elementary unit (solar cell-optical element group) forming the module. The measurements taken at the output of the module is the sum of the contributions of each elementary unit. It is not possible to dismantle each of the elementary units since the mounting errors are precisely the variables to be taken into account in the characterization. An alternative consists of covering all the elementary units except for one and carrying out as many measurements as necessary as to obtain the angular transmission function with sufficient resolution. If this task is expensive and inoperative for characterizing a production, multiplying this effort with the effort required to cover all the elementary units except for one; and, the fact that the non-covered elementary unit is a different one every time, makes it even more expensive.

The characterization of photovoltaic concentration systems is a novel line of research that is much anticipated by the industry of the sector. Due to the lack of useful tools in the industry which allow identifying problems in the optical element of the photovoltaic concentration modules, the causes leading to a reduction in efficiency of this class of modules are often unknown.

With the device and method according to the invention, it is possible to evaluate the optical element of the concentration systems characterizing not only the module but each of the elementary units separately in a single operation that can be almost instantaneous, can be applied to all the manufactured modules and not only to a statistical sample and, among other results, can also obtain additional information such as the misalignment of the elementary units (solar cell-optical element groups) due to the lenses, the secondaries, or the cells; and thus also the misalignment of the module in its entirety with respect to its fixing elements.

The technique prevents the use of expensive devices such as structures designed for supporting and rotating the module or for its collimated illumination; and provides a characterization regardless of the way of illumination.

Description of the Invention

The method according to a first aspect of the invention allows evaluating the optical element of an elementary unit formed by a single "solar cell-optical element" group obtaining its impulse response $h(\alpha)$ as a function of the angle of incidence $\alpha$ of the light. Impulse response is the function characterizing, in this case, the solar cell-optical element group, the behavior measured through the generated power, as a function of the angle of incidence $\alpha$, regardless of the nature of the illumination source. The behavior of the same device, in this case the solar cell-optical element group, with respect to a light source such as the sun $s(\alpha)$ will be obtained by means of the convolution of the function characterizing the sun with the impulse response. The result of this convolution is the angular transmission function $f(\alpha) = (h * s)(\alpha)$.

As has already been indicated, both the impulse response $h(\alpha)$ and the angular transmission function $f(\alpha)$ are defined for a specific light path contained in a meridian plane of the photovoltaic concentration module, $\alpha$ being the angle of incidence with respect to the normal determining the position in said path. The meridian plane or planes parallel to the meridian are denoted as $P_\alpha$. The intersection of the meridian plane $P_\alpha$ with the primary plane of the module is a straight line coinciding with the direction along which the evolution of the functions $h(\alpha)$ or $f(\alpha)$ when $\alpha$ changes, is expressed. As will be described, this direction or path will be that which will be established by means of orienting the alignment of an array of cameras.

This same method according to the present invention allows evaluating a plurality of elementary units or all the units making up the module in one and the same operation where this evaluation provides the functions that characterize each of these elementary units.

The method carries out the characterization of a photovoltaic concentration module which in turn comprises a plurality of elementary "solar cell-optical element" units. The method is applicable to a device comprising:

a) an optical collimator defining the focal plane oriented perpendicular to the focal axis of the optical collimator and positioned passing through the focal point of said optical collimator,
b) a support suitable for supporting the module to be characterized located in a location of the focal plane and with the main receiving surface of the module oriented towards the optical collimator.

The position of the optical collimator will be used as a reference element since it defines the position and orientation of the focal axis as well as of its focal point. The plane perpendicular to this focal axis passing through the focal point is the focal plane which will serve to distribute various components according to the embodiments. Particularly, the support of the module which allows said module to be oriented towards the optical collimator in an operative mode is located in the focal plane. The module is located in a location of the focal plane where, according to several embodiments, the position with respect to the focal point will result in different possible configurations. c) a power supply source suitable for electrically powering the module such that said module operates as a light emitter.

Even though the module in the state of the art is characterized by its illumination either natural illumination with sunlight or illumination with elements the emission of which has a known spectrum, in the present invention, the light source is the module itself. The modules formed by solar cells take in electric power to operate as light emitters. The invention is provided with a suitable power supply source so that the module which is installed in the support works in this manner, emitting light. A first advantage of this strategy is that the measurements obtained will not depend on the spectrum of an external light source and an external source capable of illuminating the entire module is not necessary.

d) a plurality of $n$ cameras which in turn comprise an image sensor and an optical element:

- the plurality of $n$ cameras is distributed along a line located essentially in the focal plane where each of the cameras is oriented for taking an image of the module through the optical collimator,
- the line along which the plurality of $n$ cameras is distributed is contained in a plane $P_\alpha$ perpendicular to the focal plane having an orientation coinciding with the orientation determined by the axis of the primary plane of the module along which the angle $\alpha$ coinciding with the independent variable of the impulse function $h(\alpha)$ with which the module is to be characterized, is examined,
- the position of each camera is such that it captures the image of the module located in the support corresponding to the light emission with a specific direction according to the angle of incidence $\alpha$ transmitted through the optical collimator,
- the focus of the optical element of each of the cameras is such that the image obtainable from the module through the optical collimator is located within the depth of field.

The module located on the support is oriented towards the optical collimator. The $n$ cameras forming the device are oriented for taking an image of the module through the optical collimator and particularly, when the module is in an operative mode, operating as a light emitter, the cameras allow taking an image of the illuminated module because it is generating light.

The cameras does not only have a sensor which receives the light emitted by the module with the interposition of the optical collimator but rather, since they are provided with an optical element focused on the module, the sensor receives the image of the observed illuminated module with an angle of incidence $\alpha$ determined by the position of the camera in the focal plane.

Given that the objective of the invention is to obtain a characterization of the module by providing its impulse response, the function $h(\alpha)$, the position of the cameras in the focal plane along a line is such that each of the positions corresponds to different values of the angle of incidence $\alpha_i$ such that they allow defining the function $h(\alpha)$ from a set of discrete values $h_i = h(\alpha_i)$.

The image of the module operating as a light emitter depends on the angle of incidence $\alpha$ and this image contains at least one area where a captured elementary unit is shown. The plurality of $n$ cameras, each of them having a different position, provide images containing an area of the at least one elementary unit corresponding to a different angle of incidence $\alpha_i$. If the images contain areas corresponding to more than one elementary unit, it is possible to obtain as many impulse response functions as elementary units captured, from the same images.

A plane $P_\alpha$ perpendicular to the focal plane is defined such that the intersection between this plane $P_\alpha$ and the focal plane coincides with the orientation of the path along which the plurality of cameras extends. This same path coincides with the orientation of the axis located on the plane defined by the surface of the module along which the evolution of the angle is measured.

e) a central processing unit in communication with the image sensors of each of the cameras suitable for receiving the images ($I_i$, $i$ = 1..$n$) captured by the image sensors and for carrying out the processing of said images;

The central processing unit is suitable for carrying out the steps of the method allowing the characterization. Nevertheless, this central processing unit can in turn be comprised by other processing subunits which specialize in specific tasks or which carry out parallel image processing, for example.

The method according to the invention comprises the following steps:

f) placing the module to be characterized on the support oriented towards the optical collimator,
g) powering the module electrically so that it operates as an emitter emitting light towards the optical collimator,
h) while the module is emitting light, capturing the image of the module by means of the image sensors of each of the cameras of the plurality of $n$ cameras and transferring said images ($I_i$, $i$ = 1..$n$) to the central processing unit,
i) by means of the central processing unit, for an pre-established elementary "solar cell-optical element" unit from among the plurality of $n$ elementary units comprised in the module:

- identifying in each image ($I_i$, $i$ = 1..$n$) the area corresponding to the pre-established elementary "solar cell-optical element" unit,
- determining, for each image ($I_i$, $i$ = 1..$n$), the angle of incidence $\alpha$ of the light beam emission reaching the camera which has captured said image,
- evaluating, for each image ($I_i$, $i$ = 1..$n$), the emission radiation intensity of the "solar cell-optical element" group from the portion of image located inside the area of the image corresponding to said pre-established elementary "solar cell-optical element" unit.

The device allows one or several modules to be characterized which are located in the support oriented towards the optical collimator. The powering of the module allows it to operate as a light emitter such that the cameras are capable of capturing the image of the illuminated module, i.e., producing light. At least one elementary "solar cell-optical element" unit will appear as a specific area in each of the images. For example, if the image captures all the elementary "solar cell-optical element" units distributed in rows and columns, the image will look like a "chessboard" formed by areas or regions of the image distributed in the form of a matrix and such that each area will correspond with an elementary unit and the distribution will be the same in all the images. The degree of illumination observed in each elementary unit will vary form one image to another according to the camera which has captured said image. If the camera were formed only by one sensor, it would only record the sum of the incident ray supplies that reach the sensor; i.e., there would be a weighted value, the sum of the supplies of each elementary unit. In contrast, the use of an optical focusing element allows each camera to generate an image where each of them repeats the pattern formed by the plurality of elementary units located in the module. The set of images thus allows characterizing at least one elementary unit and advantageously also allows characterizing all the elementary units appearing in all the images.

The method identifies the area corresponding to the elementary unit to be characterized for each of the images. The image of the elementary unit emitting light is represented by the group of pixels comprising the area of the image that has been captured from the elementary unit. A person skilled in the art is capable of establishing a radiation intensity value from the values taken up by the pixels in the portion of the image corresponding to said elementary "solar cell-optical element" unit object of characterization. For example, it is possible to associate a pixel value with a radiation intensity value by means of pre-calibration and taking, as a value of the portion of the image, the weighted value from all the pixels comprised in said portion.

j) from the correspondence between each of the angles of incidence $\alpha$ of the emission and the radiation intensity values assessed in the image associated with said angle of incidence $\alpha$ of the emission, generating a discrete function $h_i = h(\alpha_i)$; $i$ = 1..$n$ for the pre-established elementary unit,
k) providing the function $h(\alpha_i)$; $i$ = 1..$n$ as the impulse response function for a temporary source which characterizes the pre-established elementary "solar cell-optical element" unit.

Each of the images provides a sample of impulse response function, which corresponds to the angle of incidence of the camera which has captured the image. The plurality of n cameras provides n samples of discrete function $h_i = h(\alpha_i)$; $i = 1..n$. It is possible to construct an approximating continuous function from these samples, for example, by interpolating or by correlating known functions, to give two examples.

A second aspect of the invention is the device which allows supporting the module and characterizing it using the method according to the first inventive aspect.

Description of the Drawings

The foregoing and other features and advantages of the invention will be better understood from the following detailed description of a preferred embodiment provided only by way of illustrative and non-limiting example in reference to the attached drawings:

Figure 1A shows, in elevational view, a distribution scheme of the components which allow characterizing a photovoltaic concentration module according to a first embodiment.

Figure 1B shows, in elevational view, a distribution scheme of the components which allow characterizing a photovoltaic concentration module according to a second embodiment.

Figure 2 shows the focal plane on which the module and the cameras for capturing the image are distributed.

Figure 3 schematically shows a camera with its optical element.

Figure 4 shows an example of captured images and the reconstruction of the impulse response function from the information taken in the images.

Figure 5 shows the module and the different relevant directions in the present invention.

Detailed Description of the Invention

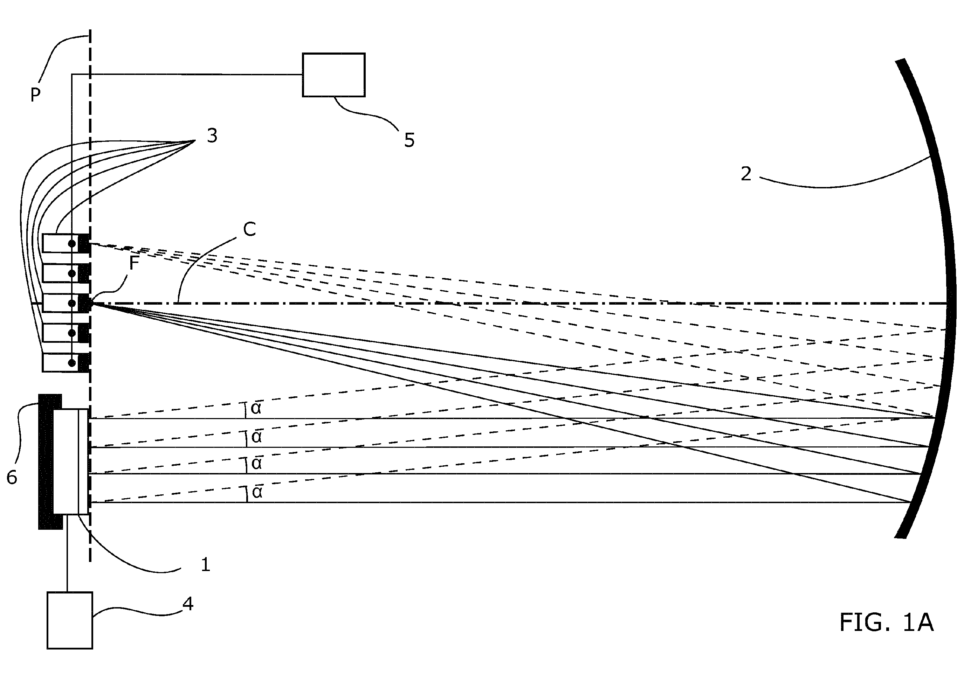

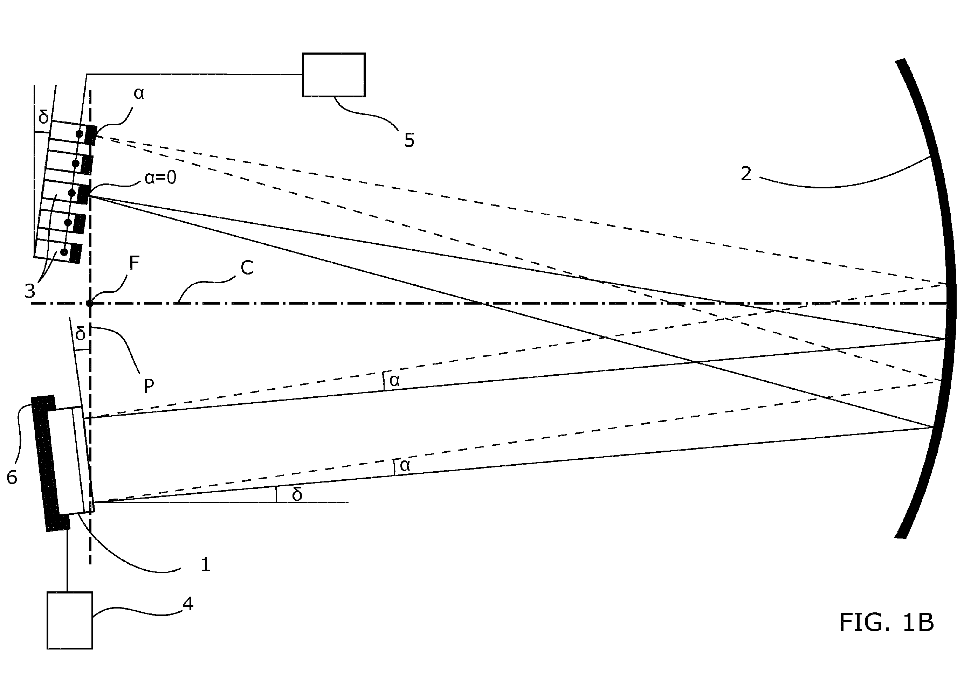

According to the first inventive aspect, the present invention is a method for characterizing a photovoltaic concentration module. Figure 1 schematically shows a first embodiment of the device which allows carrying out the characterization. The figure shows to the right an optical collimator (2) where, in this embodiment, it is made up of a collimator mirror.

This optical collimator (2) defines a focal axis (C) which is shown in dotted and dashed line and also defines a focal point (F) located on the focal axis (C).

A dashed line representing the focal plane (P) is depicted as being perpendicular to the focal axis. The focal plane (P) is arranged perpendicular to the paper where Figure 1 is depicted.

A support (6) suitable for supporting the module (1) to be characterized is shown located under the line of the focal axis (C). Once the module (1) is placed on the support (6), the surface of the module (1) is primarily located in the focal plane (P) and oriented towards the optical collimator (2).

A power supply source (4) suitable for electrically powering the module (1) such that said module (1) operates as a light emitter is also shown. Figure 1 schematically shows four light beams emerging from the module (1) in a direction perpendicular to the surface where the plurality of elementary "solar cell-optical element" units forming the module (1) is located. The beams are depicted in parallel, continuous lines striking the optical collimator (2). These beams are concentrated by reflection at the focal point (F) of the optical collimator (2). Of the emitted light, there are also beams that emerge with a specific angle $\alpha$. These beams are depicted emerging from the same point of the module as the perpendicular beams but with the exit angle $\alpha$ depicted in thin broken line.

The beams emerging with an angle $\alpha$ also strike the optical collimator with the exception that they are concentrated at a different point of the focal plane (P). A camera (3) is located at the focal point (F) where the beams with exit angle of the module $\alpha = 0$ are concentrated, and another camera (3) is also arranged at the point of the focal plane (P) where the beams with a specific exit angle $\alpha$ of the module, those depicted in dashed line, are concentrated. Five cameras aligned with respect to one another have been arranged in this embodiment, these cameras being located in the focal plane (P), such that they are located in such a way that the central camera (3) corresponds with a zero angle of incidence and there are cameras (3) for two different positive angles and two different negative angles.

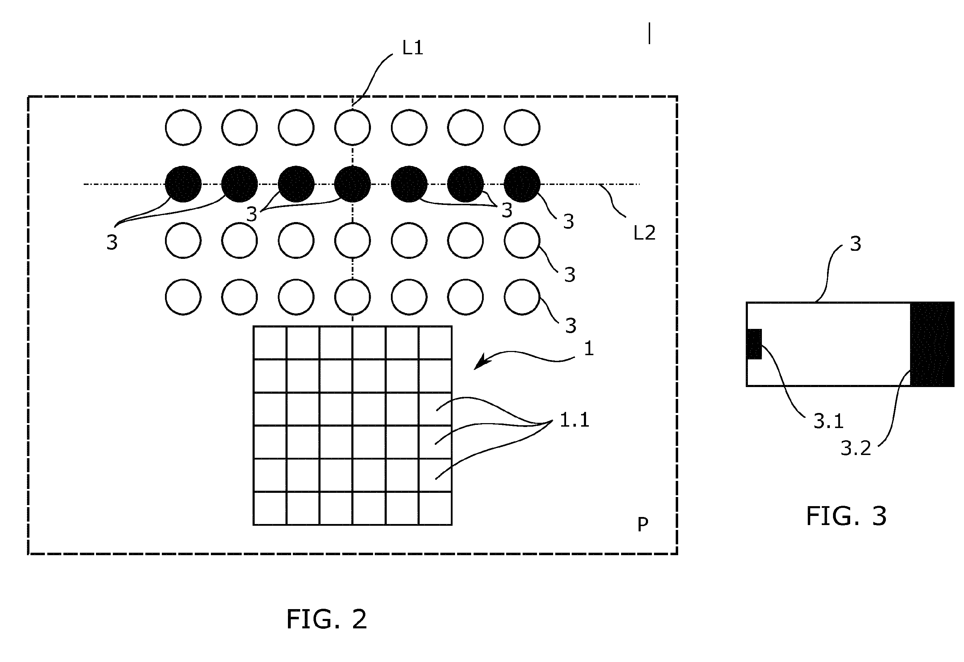

The cameras (3) are formed by a sensor (3.1) and an optical element (3.2) as shown in Figure 3. The optical element (3.2) focuses suitably on the main surface of the module (1) through the optical collimator (2) and causes the sensor (3.1) of the camera (3) to project an image of the module (1) seen through the optical collimator (2).

In this embodiment, the five images taken by means of the five cameras (3) are transmitted to a central processing unit (5) for subsequent treatment as will be described below.

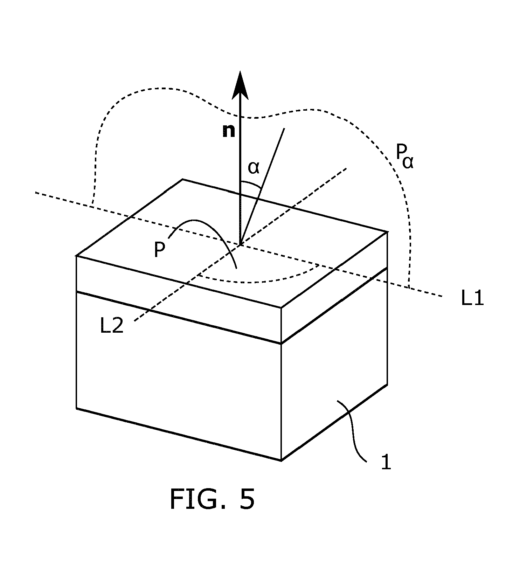

In this embodiment, the cameras (3) are vertically distributed according to the orientation in which Figure 1 is shown. The characterization of the at least one elementary unit of the module (1) will be by means of an impulse response function $h(\alpha)$. Referring to Figure 5, the module (1) has a primary plane on which the normal **n** is defined. The meridian plane $P_\alpha$ contains the normal **n** and has an orientation such that the intersection with the primary plane of the module (1) is the line L1. A vector contained in the meridian plane $P_\alpha$ and with a specific inclination $\alpha$ will have its projection on the primary plane of the module (1) located in the line L1. The orientation of this line L1 coincides with the orientation of the line along which the cameras (3) are distributed. If instead of being vertically distributed, the cameras (3) are being horizontally distributed in Figure 1, then the impulse re-

sponse function $h(\alpha)$ obtained would correspond to an axis located in the primary plane of the module (1) according to L2. The direction of the axis to which $h(\alpha)$ corresponds in the module (1) is the direction which also establishes the orientation of the plane perpendicular to the focal plane and which contains the alignment of cameras (3).

Figure 1B shows a second embodiment containing the same elements as the first embodiment with the exception that the support (6) of the module is inclined at an angle $\delta$. The light beams emerging perpendicular to the primary plane of the module (1) thus also emerge inclined at an angle $\delta$ such that the reflection in the optical collimator (2) is not at the focal point (F) but above the focal point (F). In the first embodiment, since the plurality of cameras (3) is located around the focal point (F), by locating cameras above and below, less space is available for the module (1). If the module (1) is large in size, upon arranging the cameras (3) above the focal axis (C), the space in the focal plane (P) below the focal axis (C) will be available for the module (1). In this case, above and below is indicated in reference to the orientation shown in Figure 1B, nevertheless, it is understood that what is important is that the support is at one side of the focal axis (C) and that the plurality of cameras (3) is at the other side of the focal axis (C).

The angle $\delta$ does not have to be large enough so as to enable all the cameras to be at the other side of the focal axis (C), because a movement of the group of cameras (3) will occur leaving more space for the module (1) no matter how small $\delta$ is. What is relevant is that the alignment of the cameras must also have an angle of inclination $\delta$ in the opposite direction and in the same plane. In this case, in the plane parallel to the plane of the drawing.

The slight inclination imposed by the angle $\delta$ spaces some of the cameras (3) away from the focal plane and also the primary plane of the module is no longer strictly contained in the focal plane (P). Nevertheless, the depth of field of the optical elements (3.2) of the cameras (3) means that these deviations do no prevent the invention from working.

Figure 2 shows the focal plane (P) parallel to the paper to allow observing the distributions of the plurality of cameras (3) according to several embodiments and the technical effect of said distributions on the characterization of the module (1).

The main surface of the module (1) with a matrix distribution of elementary "solar cell-optical element" units (1.1) is shown in the lower part of the focal plane (P). Each of these elementary units (1.1) is seen as a square in this embodiment. The matrix distribution extends by horizontal rows and vertical rows.

The cameras (3) are located above the module. The vertical line L1 is the vertical distribution of the cameras (3) as has been used in the first and second example. A horizontal distribution of the cameras (3) will follow an orientation according to L2. This distribution has been highlighted using solid circles instead of blank circles. The use of a distribution of the cameras (3) according to a vertical line (L1) allows characterizing one or more elementary units of the module (1) by means of impulse response functions according to a vertical axis. If a distribution of the cameras (3) according to a horizontal line (L2) is used, it is possible to characterize one or more elementary units of the module (1) by means of impulse response functions according to a horizontal axis. If the cameras (3) are arranged in a vertical distribution and in a horizontal distribution forming a cross, for example, it is possible to obtain characterizations according to two coordinate axes. In Figure 5 the lines L1 and L2 are the coordinate axes.

Figure 2 shows an array of cameras (3) which does not only allow simultaneously characterizing according to coordinate axes but rather oblique alignments can be taken by only selecting the suitable images by means of the central processing unit (5).

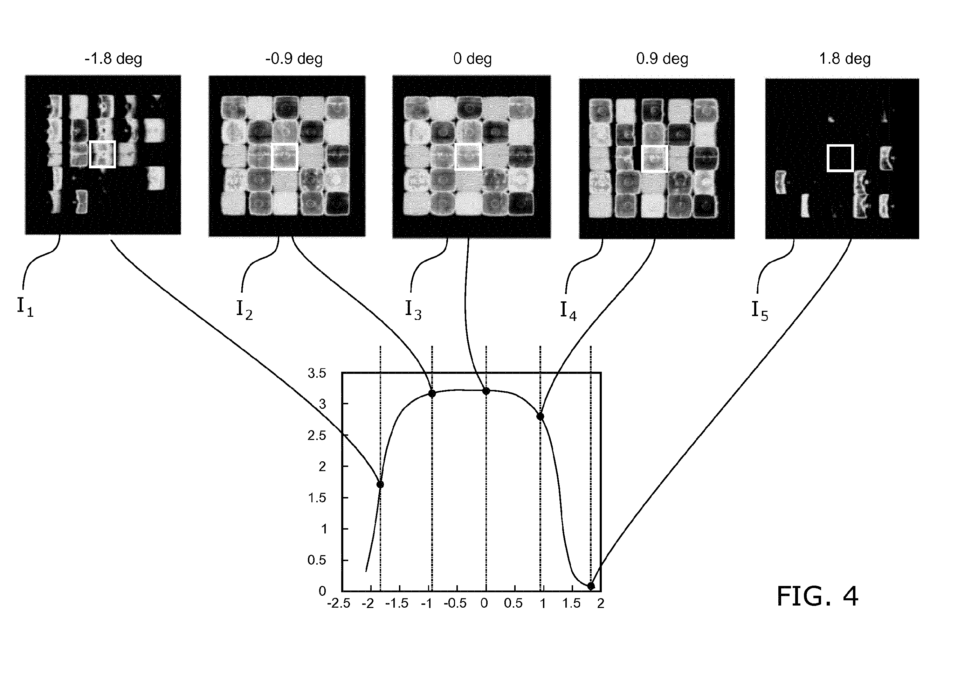

Figure 4 shows a sequence of five images taken by five cameras (3) aligned with respect to one another according to, for example, L1 of a module (1) formed by elementary "solar cell-optical element" units (1.1) distributed in a 5x5 array.

The position of the first camera (3) corresponds to an angle of incidence $\alpha=-1.8°$, the second camera (3) to an angle of incidence $\alpha=-0.9°$, the third camera (3) to an angle of incidence $\alpha=0°$, the fourth camera (3) to an angle of incidence $\alpha=0.9°$; and the fifth camera (3) to an angle of incidence $\alpha=1.8°$.

All the elementary "solar cell-optical element" units (1.1) is observed in each of the images, 25 areas or regions distributed in 5 rows and 5 columns being observed since they show a captured module (1) formed by a matrix of 5x5 elementary "solar cell-optical element" units (1.1) illuminated as a result of the power supply (4).

In this embodiment, the elementary "solar cell-optical element" unit (1.1) located in the center of the 5x5 array is characterized. Once the five images are captured, the method identifies the area corresponding to the predetermined elementary unit (the central unit). This identification is shown in the form of a white rectangle superposed to each of the images, marking the area of the image corresponding to said elementary unit (1.1).

For each area corresponding to the predetermined elementary unit, the evaluation of the emission radiation intensity is carried out, for example, by pre-assigning values taken up by the pixels with radiation intensity values after carrying out a pre-calibration and weighing the values corresponding to all the pixels in the area.

A radiation intensity value which allows constructing the discrete function shown at the bottom of Figure 4 is obtained for each angle $\alpha$. In this case, the continuous function $h(\alpha)$ depicted by means of a curve in continuous line has been generated by means of an interpolating polynomial based on the five values of the discrete function $h(\alpha_i)$, $i = 1,..,5$.

The images also show areas of the rest of the elementary units (1.1). Each of the 25 elementary units (1.1) could be characterized from these same images for the direction defined by the line along which the cameras (3) are distributed. To enable comparing the curves obtained for the individual units, the cells should emit at the same intensity, however, this does not occur. Each cell in the module emits at a different intensity (they do not have to emit at the same intensity) so the curve which is obtained is normalized. In other words, each lense-cell assembly is normalized by the sum of all the values forming said curve. It is thus possible to compare the curves between the different lenses, assuming that all of them emit at the same intensity.

If images were acquired by means of an array of cameras, the invention allows constructing a two-dimensional impulse response function. Each impulse response function in a specific direction corresponds to the function obtained by selecting the images according to said direction. The selection of images according to a diagonal would allow, for example, constructing the impulse response function for characterizing a specific elementary unit (1.1) according to an oblique direction at 45 degrees with respect to the coordinate lines L1 and L2 if these are vertical and horizontal lines, respectively, as depicted in Figure 2.

Another object of the invention is the components which allow the support so that the latter is characterized by applying the method according to the first inventive aspect.

## Claims

1. Method for characterizing a photovoltaic concentration module (1) which in turn comprises a plurality of elementary "solar cell-optical element" units, applicable to a device comprising:

   a) an optical collimator (2) defining the focal plane (P) oriented perpendicular to the focal axis (C) of the optical collimator (2) and positioned passing through the focal point (F) of said optical collimator (2),
   b) a support (6) suitable for supporting the module (1) to be characterized located in a location of the focal plane (P) and with the main receiving surface of the module (1) oriented towards the optical collimator (2),
   c) a power supply source (4) suitable for electrically powering the module (1) such that said module (1) operates as a light emitter,
   d) a plurality of $n$ cameras (3) which in turn comprise an image sensor (3.1) and an optical element (3.2) where:

      - the plurality of $n$ cameras (3) is distributed along a line (L1, L2) located essentially in the focal plane (P) where each of the cameras (3) is oriented for taking an image of the module (1) through the optical collimator (2),
   - the line (L1, L2) along which the plurality of $n$ cameras (3) is distributed is contained in a plane $P_\alpha$ perpendicular to the focal plane (P) having an orientation coinciding with the orientation determined by the axis of the primary plane of the module (1) along which the angle $\alpha$, coinciding with the independent variable of the impulse function $h(\alpha)$ with which the module (1) is to be characterized, is examined,
   - the position of each camera (3) is such that it captures the image of the module (1) located in the support (6) corresponding to the light emission with a specific direction according to the angle of incidence $\alpha$ transmitted through the optical collimator (2),
   - the focus of the optical element (3.2) of each of the cameras (3) is such that the image obtainable from the module (1) through the optical collimator (2) is located within the depth of field,

   e) a central processing unit (5) in communication with the image sensors (3.1) of each of the cameras (3) suitable for receiving the images ($I_i$, $i = 1..n$) captured by the image sensors (3.1) and for carrying out the processing of said images;

where said method comprises the following steps:

   f) placing the module (1) to be characterized on the support (6) oriented towards the optical collimator (2),
   g) electrically powering the module (1) so that it operates as an emitter emitting light towards the optical collimator (2),
   h) while the module (1) is emitting light, capturing the image (I) of the module by means of the image sensors (3.1) of each of the cameras (3) of the plurality of $n$ cameras (3) and transferring said images ($I_i$, $i = 1..n$) to the central processing unit (5),
   i) by means of the central processing unit (5), for an pre-established elementary "solar cell-optical element" unit from among the plurality of $n$ elementary units comprised in the module (1):

      - identifying in each image ($I_i$, $i = 1..n$) the area corresponding to the pre-established elementary "solar cell-optical element" unit,
      - determining, for each image ($I_i$, $i = 1..n$), the angle of incidence $\alpha$ of the light beam emission reaching the camera (3) which has captured said image,

- evaluating, for each image ($I_i$, $i = 1..n$), the emission radiation intensity of the "solar cell-optical element" group from the portion of image located inside the area of the image corresponding to said pre-established elementary "solar cell-optical element" unit,

j) from the correspondence between each of the angles of incidence $\alpha$ of the emission and the radiation intensity values evaluated in the image associated with said angle of incidence $\alpha$ of the emission, generating a discrete function $h_i = h(\alpha_i)$; $i = 1..n$ for the pre-established elementary unit,

k) providing the function $h(\alpha_i)$; $i = 1..n$ as the impulse response function for a temporary source which characterizes the pre-established elementary "solar cell-optical element" unit.

2. The method according to claim 1, **characterized in that** by means of the images captured in step h), steps i) and j) are carried out for a plurality of elementary "solar cell-optical element" units or for all the elementary "solar cell-optical element" units, characterizing from the same images said plurality of or all the "solar cell-optical element" groups.

3. The method according to claim 1 or 2, **characterized in that** the device comprises a multiplicity $m$ of rows formed by a plurality of $n$ cameras (3) distributed along each row giving rise to an array of cameras (3), this array of cameras (3) being located essentially in the focal plane (P).

4. The method according to claim 4, **characterized in that** by means of images from cameras distributed in rows in the array and by means of images from cameras distributed in columns in the same array, steps i) and j) are carried out for one or more elementary "solar cell-optical element" units for simultaneously **characterizing by** means of impulse response functions corresponding to directions of incidence contained in the planes determined by the positions of the cameras.

5. The method according to any of claims 1 to 4, **characterized in that** the support (6) suitable for supporting the module (1) is inclined with respect to the focal axis (C) of the optical collimator (2) and the plurality of $n$ cameras (3) is spaced from the same focal axis (C).

6. The method according to any of claims 1 to 4, **characterized in that** the support (6) suitable for supporting the module (1) is parallel to the focal plane (P) and perpendicular with respect to the focal axis (C) of the optical collimator (2); and the plurality of $n$ cameras (3) is centered with respect to the focal axis (C).

7. The method according to any of the preceding claims, **characterized in that** at least one of the cameras (3) has the focus established with a focal length located in the infinite.

8. The method according to any of the preceding claims, **characterized in that** the central processing unit (5) is in turn comprised by central processing subunits responsible for specific tasks.

9. The method according to any of the preceding claims, **characterized in that** the radiation intensity associated with an area of the image is determined by assigning a specific scalar value to each pixel of the area and from these values the radiation intensity is calculated as the sum of all the assigned values.

10. The method according to claim 9, **characterized in that** the radiation intensity value associated with an area of the image taken as a sample of a curve is normalized by the sum of all the values forming said curve.

11. The method according to any of the preceding claims, **characterized in that**, given a radiation source defined from its characteristic function $s(\alpha)$, the angular transmission function $f(\alpha)$ characterizing the behavior of an elementary "solar cell-optical element" unit with respect to said source is determined as the convolution of the characteristic function $s(\alpha)$ with the impulse response function

$$f(\alpha) = (f * h)(\alpha)$$

obtained for said elementary unit.

12. A device suitable for characterizing a photovoltaic concentration module (1) comprising components a)-e) of claim 1 and where the central processing unit (5) is suitable for carrying out tasks f)-j) of said claim 1.

13. The device according to claim 11, **characterized in that** it comprises an array of cameras (3).

14. The device according to claim 11, **characterized in that** the optical collimator is a collimator mirror (2).

FIG. 1A

FIG. 1B

FIG. 2

FIG. 3

EP 2 790 029 A1

-1.8 deg   -0.9 deg   0 deg   0.9 deg   1.8 deg

$I_1$   $I_2$   $I_3$   $I_4$   $I_5$

FIG. 4

FIG. 5

Europäisches
Patentamt

European
Patent Office

Office européen
des brevets

**EUROPEAN SEARCH REPORT**

Application Number

EP 13 38 2131

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| A | US 6 512 385 B1 (PFAFF PAUL [US] ET AL) 28 January 2003 (2003-01-28) * the whole document * ----- | 1-14 | INV. G01R31/40 |

TECHNICAL FIELDS
SEARCHED (IPC)

G01R

The present search report has been drawn up for all claims

| Place of search | Date of completion of the search | Examiner |
|---|---|---|
| The Hague | 8 August 2013 | Boero, Mauro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 13 38 2131

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2013

| Patent document cited in search report | | Publication date | Patent family member(s) | | Publication date |
|---|---|---|---|---|---|
| US 6512385 | B1 | 28-01-2003 | US | 6512385 B1 | 28-01-2003 |
| | | | US | 2003057972 A1 | 27-03-2003 |
| | | | US | 2004046577 A1 | 11-03-2004 |
| | | | US | 2005156609 A1 | 21-07-2005 |
| | | | US | 2007018662 A1 | 25-01-2007 |
| | | | US | 2007019209 A1 | 25-01-2007 |
| | | | US | 2008186580 A1 | 07-08-2008 |
| | | | US | 2009002717 A1 | 01-01-2009 |
| | | | US | 2010091292 A1 | 15-04-2010 |
| | | | US | 2012133922 A1 | 31-05-2012 |
| | | | US | 2013181722 A1 | 18-07-2013 |

EPO FORM P0459

For more details about this annex : see Official Journal of the European Patent Office, No. 12/82